Europäisches Patentamt

European Patent Office

Office européen des brevets

(19)

(11) Publication number: **0 485 001 A2**

# EUROPEAN PATENT APPLICATION

(12)

(21) Application number: **91202732.3**

(22) Date of filing: **22.10.91**

(51) Int. Cl.5: **F16C 35/067**

(30) Priority: **09.11.90 GB 9024407**

(43) Date of publication of application:
**13.05.92 Bulletin 92/20**

(84) Designated Contracting States:
**DE ES FR**

(71) Applicant: **DELCO PRODUCTS OVERSEAS CORPORATION**
**3044 West Grand Boulevard**
**Detroit Michigan 48202(US)**

(72) Inventor: **Powell, Keith Baden**
**23 New Road**
**Drayton Parslow, Milton Keynes MK17**
**0JH(GB)**

(74) Representative: **Haines, Arthur Donald et al**
**Patent Section 1st Floor Gideon House 28**
**Chapel Street**
**Luton, Bedfordshire LU1 2SE(GB)**

(54) Bearing retention method.

(57) A retention method for securely fastening a cylindrically-shaped article, such as a bearing (10), within an annular socket (12) in a planar support member (14) comprises the steps of: forming said annular socket (12) within said planar support member (14) with an internal diameter $(D_s)$ such that said bearing (10) is a sliding fit within the socket (12), and with a depth that is at least the sum of the depth $(d_b)$ of the bearing (10) plus twice the thickness (t) of the planar support member (14), said annular socket (12) being formed with an internal annular base flange (18) and having a juncture between an open end thereof remote from the base flange (18) and said planar support member (14) in the form of a peripheral curved surface (16) having a radius of curvature (r) that is equal to at least the thickness (t) of the planar support member (14); sliding the bearing (10) into said annular socket (12) until one end of the bearing (10) makes contact with said annular base flange (18); retaining the bearing (10) in contact with said base flange (12) by means of a cylindrical support die (22) having a predetermined diameter $(D_d)$ which is slightly less than the diameter $(D_b)$ of said bearing (10); placing an annular sizing die (24) over said annular socket (12) on an opposite side of the planar support member (14) to the side facing the support die (22), said annular sizing die (24) having a predetermined internal diameter $(D_a)$ that is slightly larger than the outer diameter of the annular socket (12) and an inner curved contact perimeter (36) having a radius of curvature $(r_a)$ that is substantially less than the radius of curvature (r) of the peripheral curved surface (16) at the juncture between the socket (12) and the planar support member (14), until said inner curved contact perimeter (36) of the annular sizing die (24) comes into contact with the peripheral curved surface (16) at the juncture between the socket (12) and the planar support member (14); and then applying pressure to either, or both, of the support die (22) and the sizing die (24) sufficient to cause displacement of the material of the peripheral curved surface (16) at said juncture symmetrically inwards above the other end of the bearing (10) and into contact with said cylindrical support die (22), so as to securely retain said bearing (10) in position within said annular socket (12).

*Fig. 1.*

EP 0 485 001 A2

# Fig.2.

This invention relates to methods for securely fastening cylindrically-shaped articles within annular sockets in a support member, and, in particular, relates to a method of retaining a bearing for a shaft of an electric motor securely within an annular socket formed in an end plate of said electric motor.

It is common practice in the manufacture of an electric motor for an armature to be supported upon a rotary shaft which is, in turn, supported for rotation between two bearings spaced along the length of the shaft, each bearing being secured to a stationary portion of the electric motor. Many such electric motors have the necessary shaft bearings housed within annular sockets formed in respective end plates of the electric motors.

Each shaft bearing that is housed in an annular socket within an end plate of an electric motor needs to be secured accurately in position within the annular socket so that it cannot move with respect to the socket, yet is not deformed by the means used for securing it in position within the socket. One procedure used to secure a shaft bearing accurately in position within an annular socket is to deep-draw the socket in the end plate to a depth slightly greater than the depth of the bearing to be housed therein and with an internal diameter slightly greater than the external diameter of the bearing, so that the bearing is a sliding fit within the socket. Once the bearing is in place within the socket so that it is in contact with a base rim of the socket, the bearing is secured in position within the socket by "staking over" portions of the end plate adjacent an upper periphery of the socket so as to contact the bearing and to clamp it securely in position against the base rim of the socket. By the term "staking-over" is meant the selective forcible displacement of those portions of the end plate by means of a mechanical punch. Although such a procedure can be very effective for securing a bearing in position within a socket in an end plate, it does have the risk, particularly where roller bearings are concerned, that the displaced material might cause localised deformation of the bearing which could affect the smooth rotation of the motor shaft within the bearing. Moreover, such a staking-over procedure is difficult to carry out rapidly and consistently on an automated production line.

A retention method according to the present invention for securely fastening a cylindrically-shaped article within an annular socket in a planar support member comprises the steps of: forming said annular socket within said planar support member with an internal diameter such that said cylindrically-shaped article is a sliding fit within the socket, and with a depth that is at least the sum of the depth of the cylindrically-shaped article plus twice the thickness of the planar support member, said annular socket being formed with an internal annular base flange and having a juncture between an open end thereof remote from the base flange and said planar support member in the form of a peripheral curved surface having a radius of curvature that is equal to at least the thickness of the planar support member; sliding the cylindrically-shaped article into said annular socket until one end of the cylindrically-shaped article makes contact with said annular base flange; retaining the cylindrically-shaped article in contact with said base flange by means of a cylindrical support die having a predetermined diameter which is slightly less than the diameter of said cylindrically-shaped article; placing an annular sizing die over said annular socket on an opposite side of the planar support member to the side facing the support die, said annular sizing die having a predetermined internal diameter that is slightly larger than the outer diameter of the annular socket and an inner curved contact perimeter having a radius of curvature that is substantially less than the radius of curvature of the peripheral curved surface at the juncture between the socket and the planar support member, until said inner curved contact perimeter of the annular sizing die comes into contact with the peripheral curved surface at the juncture between the socket and the planar support member; and then applying pressure to either, or both, of the support die and the sizing die sufficient to cause displacement of the material of the peripheral curved surface at said juncture symmetrically inwards above the other end of the cylindrically-shaped article and into contact with said cylindrical support die, so as to securely retain said cylindrically-shaped article in position within said annular socket.

Preferably the cylindrically-shaped article is a bearing and the planar support member forms part of an end plate of an electric motor.

Advantageously, the curved radius of the peripheral curved surface at the juncture between the socket and the planar support member is at least 2mm, and the curved radius of the inner curved contact perimeter of the annular sizing die lies in the range of 0.5 to 1.0mm.

In a preferred embodiment of the invention, the cylindrically-shaped article is a roller bearing and the planar support member forms part of an end plate of an electric motor.

In an alternative embodiment of the invention, the cylindrically-shaped article is made up of a roller bearing and a closure cap to close off one side of the aperture in the roller bearing, and the planar support member forms part of an end plate of an electric motor.

The pressures used to produce the desired displacement of material of the peripheral curved surface at said juncture symmetrically inwards depend upon the strength of the material of the support member and the degree of displacement required. For a mild steel support member, for example, a pressure within the range of 92.66MPa to 154.44MPa is desirable.

The invention and how it may be performed are hereinafter particularly described with reference to a preferred embodiment of the present invention, as disclosed in the accompanying drawings, in which:

Figure 1 is a side view, partially in cross-section, of a portion of an end plate of an electric motor, showing a deep-drawn annular socket containing a roller bearing;

Figure 2 is a side view, partly in cross-section, of the portion of the end plate shown in Figure 1 being placed between co-acting dies of a press;

Figure 3 is a similar side view to Figure 2, showing the co-acting dies of the press in a closed position;

Figure 4 is a side view, partly in cross-section, showing the portion of the end plate shown in Figure 1, after removal from the press shown in Figure 3; and

Figure 5 is a side view, partly in cross-section, of a portion of an end plate of an electric motor, showing a deep-drawn annular socket containing a roller bearing and a closure cap secured into position within the annular socket by a method according to the present invention.

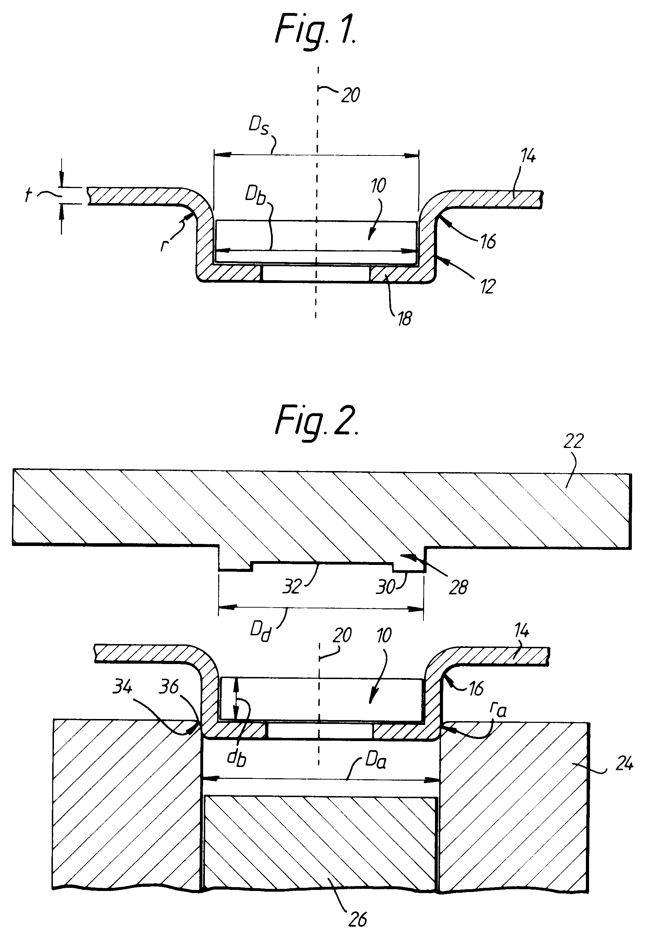

The method of the present invention, as illustrated in Figures 1 to 4 of the accompanying drawings comprises a method of securely fastening a roller bearing 10 within an annular socket 12 formed in a planar support member in the form of an end plate 14 of an electric motor (not shown). The annular socket 12 is formed in the end plate 14 by any convenient fabrication method, such as deep-drawing, and is formed with an internal diameter $D_s$ such that the roller bearing 10, having an external diameter of $D_b$, is a sliding fit within the annular socket 12. That is, the internal diameter $D_s$ of the annular socket 12 is slightly greater than the external diameter $D_b$ of the roller bearing. The depth of the annular socket 12 formed in the end plate 14 is equivalent to at least the sum of the depth $d_b$ of the roller bearing 10 plus twice the thickness t of the endplate 14. The tool (not shown) used to form the socket 12 in the end plate 14 produces a juncture between the annular socket 12 and the end plate 14 in the form of a peripheral curved surface 16 which has a radius of curvature r which is equivalent to at least the thickness t of the end plate 14. The annular socket 12 is formed with an internal annular base flange 18.

As shown in Figure 1, after the formation of the annular socket 12 in the end plate 14, the roller bearing 10 is slid into position within the annular socket 12 along a central axis 20 of the annular socket 12, until the roller bearing 10 comes into contact with, and is supported by, the internal annular base flange 18 of the annular socket 12. At this step of the method of the invention, all of the bearing 10 can rotate within the annular socket 12, and the bearing can be readily removed from the annular socket 12 by sliding it in the opposite direction along the central axis 20.

The end plate 14 is then placed between a cylindrical support die 22 and a two-part sizing die, comprising an annular sizing die 24 and a cylindrical central die 26, of a press, as shown in Figure 2 of the drawings. The cylindrical support die 22 has a central boss 28 formed thereon, which has a predetermined diameter $D_d$ which is slightly less than the external diameter $D_b$ of the roller bearing 10. The top surface of the central boss 28 comprises an outer annular support surface 30 and a central, stepped bore 32. The width of the annular support surface 30 of the central boss 28 is sufficient to cover at least the width of the outer race (not shown) of the roller bearing 10. The height of the central boss 28 is sufficient to ensure that, on closing the press, the outer annular support surface 30 contacts the outer race of the roller bearing 10 and holds the roller bearing 10 firmly in contact with the internal annular base flange 18 of the annular socket 12.

The annular sizing die 24 has an internal diameter $D_a$ such that the annular socket 12 is a sliding fit within the annular sizing die 24. A top, inner peripheral edge 34 of the annular sizing die 24 is formed with an curved contact surface 36 having a radius of curvature $r_a$ which is substantially less than the radius of curvature r of the peripheral curved surface 16 of the juncture between the annular socket 12 and the end plate 14. The cylindrical central die 26 is a sliding fit within the annular sizing die 24 and can be reciprocably moved relative thereto, so as to come into contact with the base flange 18 of the annular socket 12. Consequently the cylindrical central die 26 provides a convenient support means for the base flange 18 of the annular socket 12 during the pressure application step of the method of invention, and it also provides an effective means of removing the assembled end plate and bearing from the annular sizing die 24 when the pressure application step is completed.

As shown in Figure 2 of the drawings, the end plate 14 is loaded into the press between the dies 22, 24 and 26 so that the annular socket 12 fits into the annular sizing die 24 with the base flange 18 of the annular socket in contact with the central die 26. The cylindrical support die 22 is then lowered into position over the annular socket 12 so that the central boss 28 is inserted symmetrically within the annular socket 12 and the outer annular support surface 30 thereof comes into contact with the outer race of the roller bearing 10 and holds the roller bearing 10 firmly in contact with the internal annular base flange 18 of the annular socket 12.

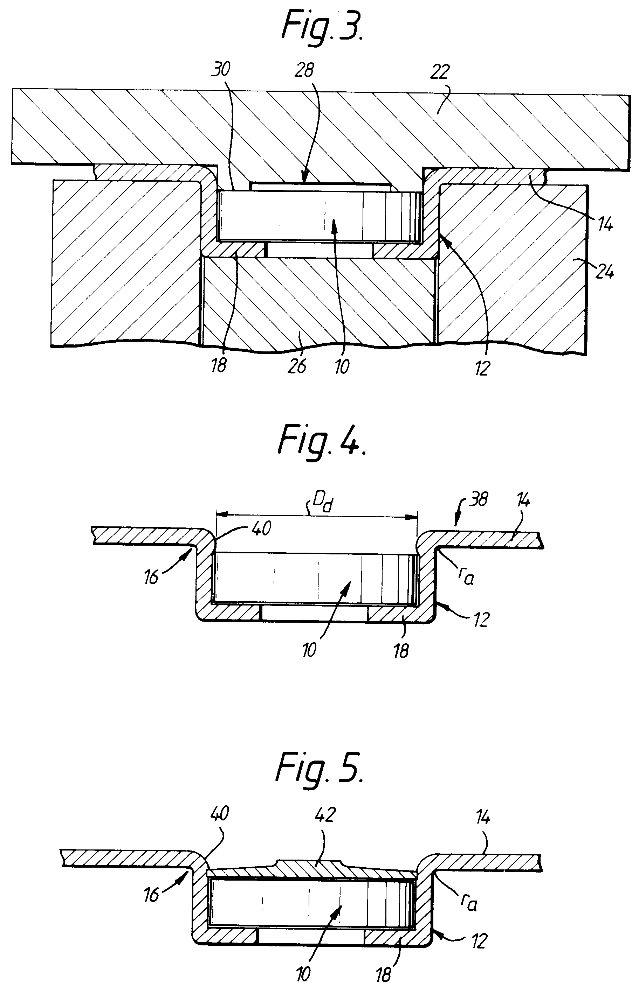

Pressure is then applied between the cylindrical support die 22 and the annular sizing die which is sufficient to cause displacement of the material of the end plate 14 from the peripheral curved surface 16 at the juncture between the annular socket 12 and the end plate 14 symmetrically inwards above the free end of the roller bearing 10 and into contact with the central boss 28 of the cylindrical support die 22, so as to securely retain the roller bearing 10 in position within the annular socket 12, as shown in Figure 3 of the drawings. The diameter $D_d$ of the central boss 28 is deliberately chosen to be less than the external diameter $D_b$ of the roller bearing 10 by an amount that will give a predetermined retaining force on the roller bearing 10. The pressure used lies in the range of 92.66MPa to 154.44MPa, when the end plate is fabricated from mild steel.

The finished roller bearing/socket assembly 38 is illustrated in Figure 4 of the drawings, from which it can be seen that the peripheral curved surface 16 of the annular socket has been re-worked by the pressing operation into a curved surface having a radius of curvature equivalent to $r_a$, and that the material displaced from the peripheral curved surface 16 during the pressing operation forms a peripheral annular bead 40 directly above the roller bearing 10 which clamps the roller bearing evenly and firmly within the annular socket 12. The peripheral annular bead 40 has an internal diameter substantially equal to the diameter $D_d$ of the central boss 28, and is shown exaggerated in shape in Figure 4 of the drawings.

In an example of the method of the present invention, an end plate of 1.5mm mild steel had an annular socket 26mm in diameter and 11mm in depth deep-drawn in it to house a roller bearing 25.99mm in diameter and 8mm in depth. The annular socket was formed with a peripheral curved surface at the juncture between the annular socket and the end plate which had a radius of curvature of 2mm. The annular sizing die used to re-press the peripheral curved surface of the annular socket had an inner curved contact surface having a radius of 0.75mm. The diameter of the central boss of the cylindrical support die used was 25.96mm. The resultant finished roller bearing/socket assembly produced by the method of the present invention displayed a retaining force on the roller bearing such that it required the exertion of a force of 2,000N on the bearing to remove the bearing from the annular socket.

In the preferred embodiment of the method of the present invention, the method involves using a die on a rear supporting surface of an annular socket formed in an end plate in order to retain a roller bearing inside the annular socket by displacing material symmetrically right around a free end of the roller bearing. Thus, the method of the present invention effectively causes the opening in the annular socket to contract around the roller bearing. The extent of the contraction is governed by the difference between the radius of curvature of the peripheral curved surface of the juncture between the annular socket and the end plate and the radius of curvature of the curved contact surface of the annular sizing die, by the pressure used on the annular sizing die, and by the diameter of the central boss of the cylindrical support die. Consequently, these parameters can be selected to produce a desired clamping force on the bearing without any risk of distorting the bearing. Alternatively, if desired, it is possible to load the bearing into the annular socket initially followed by an annular spacer, and then to use the method of the present invention to clamp both the bearing and the annular spacer in position within the annular socket. Similarly, as shown in Figure 5 of the drawings, it is possible to clamp both the roller bearing 10 and a cover cap 42 in position within the annular socket 12 by means of the peripheral annular bead 40.

The method of the present invention provides a novel way of securing a cylindrically-shaped article, such as a bearing, accurately within an annular socket of a planar support member, such as an end plate of an electric motor, quickly and effectively. It has the advantages that the parameters of the method can be easily adjusted to provide a desired retention force on the bearing, there is little or no risk of localised bearing deformation, and there is little if any damage to surface coatings on the support member and annular socket by the use of the method of the invention. This last-mentioned feature is of considerable importance where the support member is an end plate of an electric motor for a windscreen wiper. End plates of electric motors for windscreen wipers are often called upon to resist potentially corrosive conditions, and it is thus a common procedure to coat end plates made of mild steel with an anti-corrosive surface coating applied, for example, by electro-coating procedures. Securing roller bearings in place within annular sockets in such coated end plates by the method of the present invention can be done without any substantial risk of rupturing the anti-corrosive coating on the end plates. Such advantages are not displayed by the method of "staking-over" used in the prior art.

**Claims**

1. A retention method for securely fastening a cylindrically-shaped article (10) within an annular socket (12) in a planar support member (14) which includes the steps of forming said annular socket (12) within said planar support member (14) with an internal diameter ($D_s$) such that said cylindrically-shaped article (10) is a sliding fit within the socket (12), said annular socket (12) being formed with an internal annular base flange (18); sliding the cylindrically-shaped article (10) into said annular socket (12) until one end of the cylindrically-shaped article (10) makes contact with said annular base flange (18); and then deforming adjacent portions of the planar support member (14) into engagement with said cylindrically-shaped article (10), characterised in that the method includes the steps of: forming said annular socket (12) with a depth that is at least the sum of the depth ($d_b$) of the cylindrically-shaped article (10) plus twice the thickness (t) of the planar support member (14), and with a juncture between an open end of said annular socket (12) remote from the base flange (18) and said planar support member (14) which is in the form of a peripheral curved surface (16) having a radius of curvature (r) that is equal to at least the thickness (t) of the planar support member (14); retaining the cylindrically-shaped article (10) in contact with said base flange (18) by means of a cylindrical support die (22,28) which has a predetermined diameter ($D_d$) which is slightly less than the diameter ($D_b$) of said cylindrically-shaped article (10); placing an annular sizing die (24) over said annular socket (12) on an opposite side of the planar support member (14) to the side facing the support die (22,28), said annular sizing die (24) having a predetermined internal diameter ($D_a$) that is slightly larger than the outer diameter of the annular socket (12) and an inner curved contact perimeter (34,36) that has a radius of curvature ($r_a$) that is substantially less than the radius of curvature (r) of the peripheral curved surface (16) at the juncture between the socket (12) and the planar support member (14), until said inner curved contact perimeter (34,36) of the annular sizing die (24) comes into contact with the peripheral curved surface (16) at the juncture between the socket (12) and the planar support member (14); and then applying pressure to either, or both, of the support die (22,28) and the sizing die (24) sufficient to cause displacement of the material of the peripheral curved surface (16) at said juncture symmetrically inwards above the other end of the cylindrically-shaped article (10) and into contact with said cylindrical support die (22,28), so as to securely retain said cylindrically-shaped article (10) in position within said annular socket (12).

2. A retention method according to claim 1, in which the method includes the step of slidably positioning a cylindrical central die (26) within the annular sizing die (24) and into contact with said annular base flange (18) of said annular socket (12), prior to the step of applying pressure to the dies (22,28,24).

3. A retention method according to claim 1 or 2, in which the cylindrically-shaped article is a bearing (10) and the planar support member forms part of an end plate (14) of an electric motor.

4. A retention method according to claim 1, 2 or 3, in which the curved radius (r) of the peripheral curved surface (16) at the juncture between the socket (12) and the planar support member (14) is at least 2mm, and the curved radius ($r_a$) of the inner curved contact perimeter (34,36) of the annular sizing die (24) lies in the range of 0.5 to 1.0mm.

5. A retention method according to any one of claims 1 to 4, in which the cylindrically-shaped article is a roller bearing (10) and the planar support member forms part of an end plate (14) of an electric motor.

6. A retention method according to any one of claims 1 to 4, in which the cylindrically-shaped article is made up of a roller bearing (10) and a closure cap (42) to close off one side of an aperture in the roller bearing (10), and the planar support member forms part of an end plate (14) of an electric motor.

7. A retention method according to any one of the preceding claims, in which the support member (14) is fabricated from mild steel, and the pressure required to cause displacement of material from the peripheral curved surface (16) at said juncture symmetrically inwards is a pressure within the range of 92.66MPa to 154.44MPa.

8. An assembly comprising a cylindrically-shaped article (10) retained within an annular socket (12) in a planar support member (14), when obtained by a method according to any one of the preceding claims.

9. An assembly comprising a roller bearing (10) retained within an annular socket (12) in a planar support member (14), when obtained by a method according to any one of claims 5 or 6.

# Fig.1.

# Fig.2.

# Fig. 3.

# Fig. 4.

# Fig. 5.